# EUROPEAN PATENT SPECIFICATION

(11) **EP 1 787 525 B1**
(45) Date of publication and mention of the grant of the patent: **10.08.2016**
(21) Application number: 06124229.3
(22) Date of filing: 16.11.2006
(51) Int. Cl.: A23G 9/22, B21D 53/02

(54) **Method for producing a freezing chamber and the freezing chamber obtained with this method**
Verfahren zur Herstellung einer Gefrierkammer und die mit diesem Verfahren erzeugte Gefrierkammer
Procédé pour la production d'une chambre de congélation et chambre de congélation produit avec ce procédé

(30) Priority: 22.11.2005 IT BO20050706
(43) Date of publication of application: 23.05.2007
(73) Proprietor: ALI S.p.A, 20123 Milano (IT)
(72) Inventor: Cocchi, Gino, 40137 Bologna (IT); Zaniboni, Gianni, 40037 Borgonuovo di Sasso Marconi (Bolog (IT); Lazzarini, Roberto, 42100 Reggio Emilia (IT)
(74) Representative: Milli, Simone

(56) References cited:
- EP-A1- 0 677 711
- WO-A-01/40720
- US-A1- 1 533 865
- US-A1- 1 537 908
- US-A1- 2 080 639
- US-A1- 3 296 817
- US-A1- 3 545 063

## Description

The present invention relates to a method for producing a freezing chamber, and in particular a freezing chamber of an ice cream making machine.

Such chambers are designed to freeze liquid food products for the production of ice cream, using a whipping and freezing processing method.

As is known, the above-mentioned freezing chambers substantially consist of an inner cylinder and an outer cylinder which are coaxial with one another, forming a hollow space between them which extends along a helical path for the passage of a coolant.

A known method for producing such chambers is described in patent EP 0 519 252, in which the helical path is produced by winding a steel strip in a helical groove made on the outer surface of the inner cylinder.

A flange is then fixed to one end of the inner cylinder, then the outer cylinder is fixed using heat and finally a second closing flange is fixed to the second end.

In a second method, as detailed in EP-0677711, regarding the two end flanges, the first flange is produced by deforming the inner cylinder by calendering and the second closing flange for the chamber is produced by deforming the end edge of the outer cylinder until it makes contact with the outer surface of the inner cylinder, where it is fixed by welding.

Such known methods involve numerous working steps.

In the first case, a first flange is positioned on the first cylinder and welded there; the steel strip is wound around the inner cylinder; a second closing flange is fixed in place.

In the second case the flange of one end of the inner cylinder is produced first by deforming one end of the latter; the steel strip is wound around the outer cylinder; the other end of the outer cylinder is deformed to obtain the second flange. Therefore, it is evident that such methods require lengthy working times and the use of various machine tools, consequently increasing production costs. From WO-01/40720 a device for producing granular ice is know, the freezing cylinder of which may be made by a method comprising milling and/or tuming. The aim of the present invention is therefore to overcome the above-mentioned disadvantages by producing a freezing chamber which drastically limits the working times and the relative costs.

Accordingly the present invention achieves said aim with a method for producing a freezing chamber, and in particular a freezing chamber of an ice cream making machine, which has the characteristics described in one or more of the claims herein.

The technical features of the invention, in accordance with the afore-mentioned aims, are clearly indicated in the claims herein and the advantages of the invention are more apparent in the detailed description which follows, with reference to the accompanying drawings, which illustrate a preferred embodiment without limiting the scope of the invention, in which:
- Figure 1 is a schematic side view of a portion of an ice cream making machine equipped with a freezing chamber in accordance with the present invention;
- Figure 2 is an enlarged side view of a first embodiment of the freezing chamber of Figure 1 which is not part of the invention;
- Figures 3 and 4 are respectively a perspective view and a schematic side view of a second embodiment of the freezing chamber which is not part of the invention;
- Figure 5 is respectively a perspective view of an embodiment of the freezing chamber which is not part of the invention;
- Figure 6 is a schematic side view of a preferred embodiment of the freezing chamber which is part of the invention;
- Figure 7 is a perspective view of another embodiment of the freezing chamber of Figure 1 which is not part of the invention.

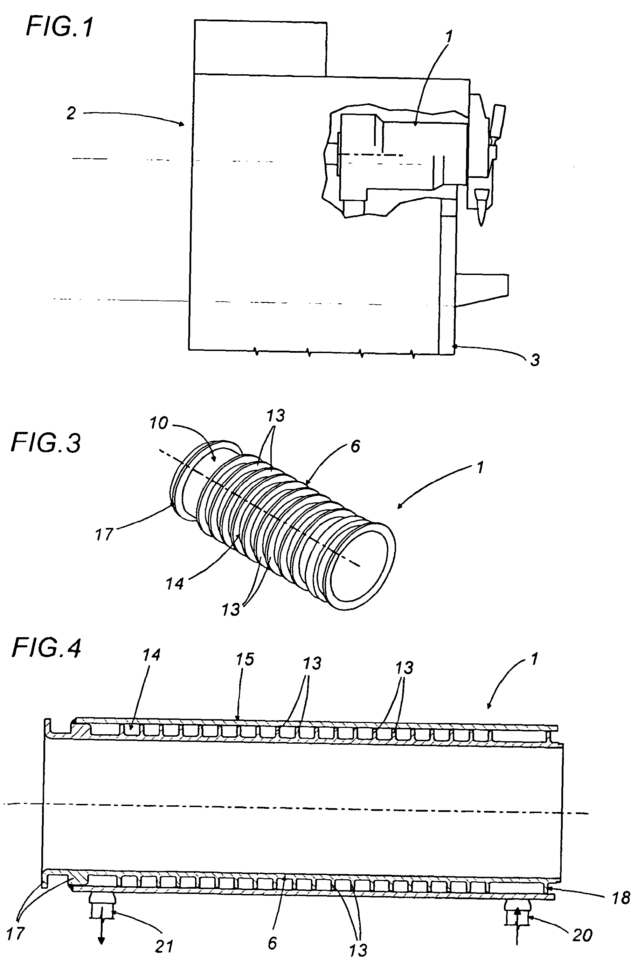

With reference to Figure 1, the numeral 1 denotes as a whole a freezing chamber, which is part of an ice cream making machine 2, whose base 3 is partly illustrated.

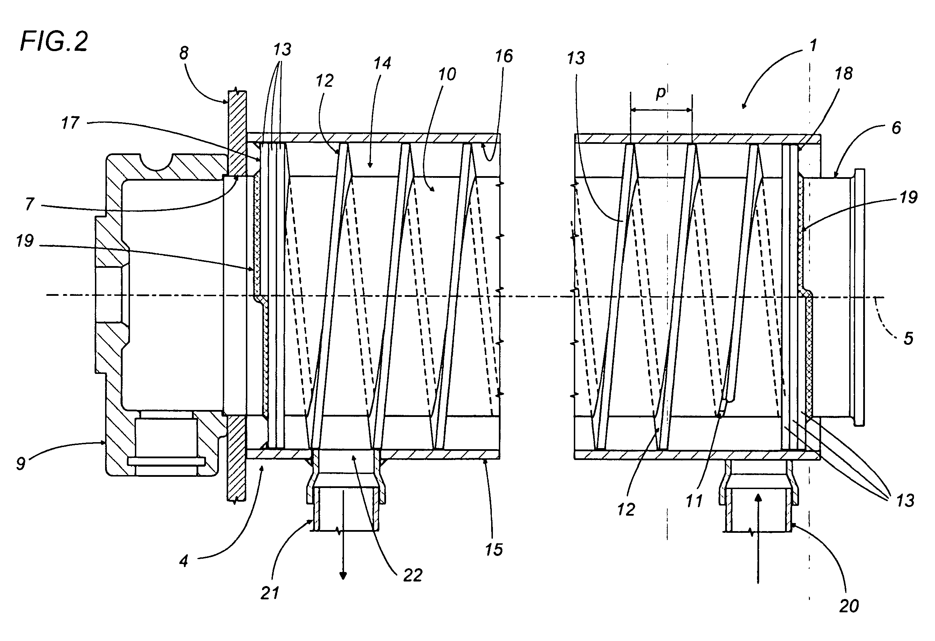

As illustrated in Figure 2, the freezing chamber 1 consists of a substantially cylindrical body 4, whose axis is labelled 5. The cylindrical body 4 comprises an inner cylinder 6, whose left-hand end (seen in Figure 2), positioned at an opening 7 made in a front wall 8 of the base 3, is sealed closed by a lid 9 of the known type.

The outer cylindrical surface 10 of the inner cylinder 6 bears a spiral groove 11, in which one edge of a substantially flat metal strip 12 is inserted.

The metal strip 12 therefore forms, with its coils 13 which have a predetermined constant pitch p, a helical path 14.

The cylindrical body 4 also comprises an outer cylinder 15 coaxial with the inner cylinder 6 and fitted on the latter using heat, so as to seal closed, with its inner cylindrical surface 16, the helical path 14.

The inner cylinder 6 and the outer cylinder 15 are connected to one another at the respective longitudinal ends by two flanges, labelled 17 and 18 from left to right. Said flanges 17, 18, which constitute the elements that close the two ends of the helical path 14, consist of a plurality of coils 13 of the metal strip 12 drawn near to one another and rendered integral with the surface 10 of the inner cylinder 6 with respective ring-shaped welds 19.

The helical path 14 constitutes a circuit for the passage of a coolant, whose inlet and outlet consist respectively of a sleeve 20 and a sleeve 21, fixed at respective holes 22 made in the wall of the outer cylinder 15 close to the flanges 17 and 18.

With reference to Figures 3 and 4 (which refer to embodiments not part of the invention), the freezing chamber 1 is differentiated from that described and illustrated in Figure 2 (which refers to an embodiment not part of the invention) in that the coils 13 forming the helical path 14 and the two end flanges 17 and 18, are obtained by turning work on the outer surface 10 of the inner cylinder 6, on which the outer cylinder 15 is fitted (Figure 4 which refers to an embodiment not part of the invention).

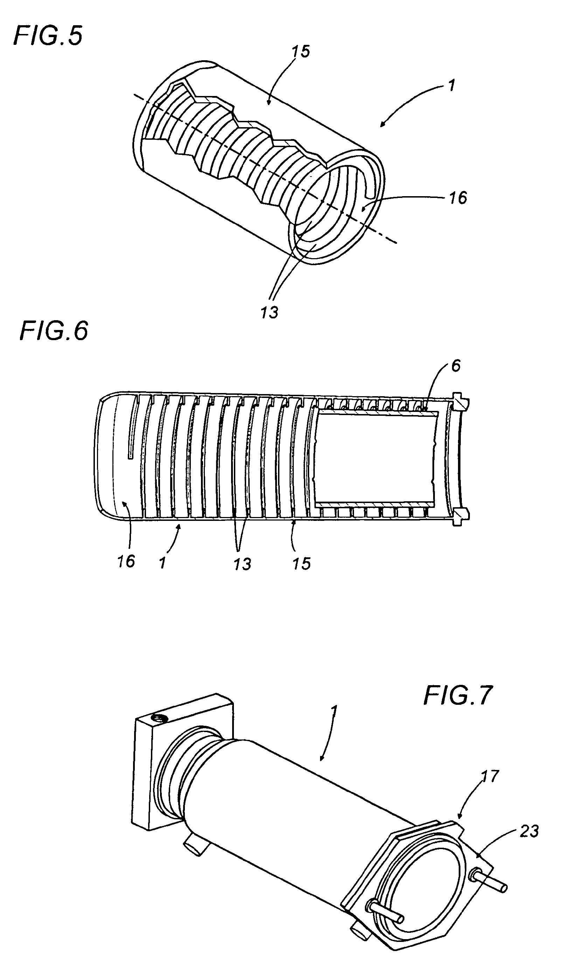

With reference to Figures 5 and 6 (only figure 6 refers to an embodiment according to the invention) the freezing chamber 1 differs from that illustrated in Figures 3 and 4 solely in that the helical path 14 and the two end flanges 17 and 18 are produced with turning work on the inner surface 16 of the outer cylinder 15, in which the inner cylinder 6 is inserted.

Finally, with reference to Figure 7 (which refers to an embodiment not part of the invention), the end flange 17 is formed by applying a ring-shaped element 23 after the working step and may be made of a plastic material.

The invention described has evident industrial applications and may be modified and adapted without thereby departing from the scope of the inventive concept. Moreover, all details of the invention may be substituted by technically equivalent elements.

## Claims

1. A method for producing a freezing chamber, in ice cream making machines, comprising a step of producing a helical path (14) between an inner cylinder (6) and an outer cylinder (15), a step of producing a first flange (17) and a second flange (18) for closing the opposite ends of the helical path (14), the method being **characterised in that** the step of producing the helical path (14) and the step of producing the first and the second flanges (17, 18) substantially coincide and are carried out by means of the same working step, wherein the step of producing the helical path (14) and the step of producing the first and the second flanges (17, 18) consist of a working operation, consisting of a turning operation, on the outer cylinder (15).

2. A freezing chamber, in ice cream making machines, **characterised in that** it is obtained using the method in accordance with the foregoing claim 1.

3. An ice cream making machine, **characterised in that** it comprises a freezing chamber in accordance with claim 2.

## Patentansprüche

1. Verfahren zur Herstellung einer Gefrierkammer in Speiseeisherstellungsmaschinen, umfassend einen Schritt zum Herstellen eines schraubenförmigen Wegs (14) zwischen einem Innenzylinder (6) und einem Außenzylinder (15), einen Schritt zum Herstellen eines ersten Flanschs (17) und eines zweiten Flanschs (18), um die entgegengesetzten Enden des schraubenförmigen Wegs (14) zu verschließen, wobei das Verfahren **dadurch gekennzeichnet ist, dass** der Schritt zum Herstellen des schraubenförmigen Wegs (14) und der Schritt zum Herstellen des ersten und zweiten Flanschs (17, 18) im Wesentlichen übereinstimmen und mithilfe desselben Arbeitsschritts durchgeführt werden, wobei der Schritt zum Herstellen des schraubenförmigen Wegs (14) und der Schritt zum Herstellen des ersten und des zweiten Flanschs (17, 18) aus einem Arbeitsgang bestehen, der aus einem Drehvorgang auf dem Außenzylinder (15) besteht.

2. Gefrierkammer in Speiseeisherstellungsmaschinen, **dadurch gekennzeichnet, dass** diese durch Nutzung des Verfahrens nach Anspruch 1 erhalten wird.

3. Speiseeisherstellungsmaschine, **dadurch gekennzeichnet, dass** sie eine Gefrierkammer nach Anspruch 2 umfasst.

## Revendications

1. Procédé pour la production d'une chambre de congélation dans des sorbetières, comprenant une étape consistant à réaliser une trajectoire hélicoïdale (14) entre un cylindre interne (6) et un cylindre externe (15), une étape consistant à réaliser première bride (17) et une seconde bride (18) destinées à fermer les extrémités opposées de la trajectoire hélicoïdale (14), le procédé étant **caractérisé en ce que** l'étape consistant à réaliser la trajectoire hélicoïdale (14) et l'étape consistant à réaliser les première et seconde brides (17, 18) coïncident substantiellement et sont effectuées au moyen de la même phase d'élaboration, dans lequel l'étape consistant à réaliser la trajectoire hélicoïdale (14) et l'étape consistant à réaliser les première et seconde brides (17, 18) consistent en une opération d'élaboration, consistant en une opération de tournage sur le cylindre externe (15).

2. Chambre de congélation dans des sorbetières, **caractérisée en ce qu'**elle est obtenue en utilisant le procédé selon la revendication 1 qui précède.

3. Sorbetière, **caractérisée en ce qu'**elle comprend une chambre de congélation selon la revendication 2.
